# EUROPÄISCHE PATENTSCHRIFT

(11) **EP 0 448 743 B1**
(45) Veröffentlichungstag und Bekanntmachung des Hinweises auf die Patenterteilung: **06.11.1996**
(21) Anmeldenummer: 90105710.9
(22) Anmeldetag: 26.03.1990
(51) Int. Cl.: G06F 12/08, G06F 15/16, G06F 13/36

(54) **Multiprozessorsystem mit einem Leitungssystem zur Kopplung mehrerer Verarbeitungseinheiten mit zugehörigen privaten Cachespeichern und eines gemeinsamen Arbeitsspeichers**
Multiprocessor system with a bus for coupling a plurality of processing units with their private cache memories and a common working memory
Système multiprocesseur avec un bus pour le couplage de plusieurs unités de traitement avec leurs antémémoires privées et d'une mémoire de travail commune

(43) Veröffentlichungstag der Anmeldung: 02.10.1991
(73) Patentinhaber: Siemens Nixdorf Informationssysteme Aktiengesellschaft, 33102 Paderborn (DE)
(72) Erfinder: Kock, Jürgen, D-8018 Grafing (DE); Mooshammer, Peter, Dipl.-Ing., D-8000 München 70 (DE); Rottmann, Wilfried, Dipl.-Ing., D-8000 München 60 (DE); Täuber, Erich, D-8029 Sauerlach (DE)
(74) Vertreter: Fuchs, Franz-Josef, Dr.-Ing.

(56) Entgegenhaltungen:
- EP-A- 0 192 366
- 13th ANNUAL SYMPOSIUM ON COMPUTER ARCHITECTURE June 2-5, 1986, pages 414-423, New-York (US) P. SWEAZEY et al: "A Class of Compatible Cache Consistency Protocols and their Support by the IEEE Futurebus"
- SPRING COMPCON 88, February 29 - March 4, 1988, pages 505-511, New-York (US) P. SWEAZEY: "Shared Memory Systems on the Futurebus"
- ELECTRONICS. vol. 60, no. 11, 28 Mai 1987, NEW YORK US Seiten 76 - 78; T. MANUEL: "How sequent's new model outruns most mainframes"
- ELECTRONIC DESIGN. vol. 32, no. 18, 6 September 1984, HASBROUCK HEIGHTS, N Seiten 153 - 168; G. FIELLAND et al: "32-bit computer system shares load equally among up to 12 processors"

## Beschreibung

Die Erfindung betrifft ein Multiprozessorsystem mit einem Leitungssystem, an das mehrere Verarbeitungseinheiten mit zugehörigen privaten Cachespeichern und ein gemeinsamer Arbeitsspeicher als Teilnehmer angeschlossen sind.

Die Entwicklung der Hard-und Softwaretechnologie in den letzten Jahren hat dazu geführt, daß in zunehmendem Maße in Datenverarbeitungssystemen Multiprozessorsysteme zur Steigerung der Systemleistung benutzt werden. Derartige Multiprozessorsysteme bedienen sich eines gemeinsamen Leitungssystems, eines sogenannten Bus-Systems, zur Kopplung mehrerer Verarbeitungseinheiten mit einem gemeinsamen Arbeitsspeicher. Neben den geringen Kosten hat ein derartiges Leitungssystem den Vorteil, daß es als standardisiertes Übertragungsmittel lediglich einmal entwickelt werden muß und durch den Anschluß zusätzlicher, auch unterschiedlicher Verarbeitungseinheiten, relativ einfach in Leistung und Funktion erweiterbar ist.

Wegen des hohen Datenverkehrs zwischen den Verarbeitungseinheiten und dem Arbeitsspeicher sind die Anforderungen an das Leitungssystem sehr hoch. Die mittlere Datenzugriffszeit im System wird durch die Zugriffszeit des Arbeitsspeichers und die Leistungsfähigkeit des Leitungssystems bestimmt. Aufgrund der relativ großen Zugriffszeit des Arbeitsspeichers, trotz zunehmender Integration und Geschwindigkeit der verfügbaren Speicherbausteine, läßt sich eine bei Multiprozessorsystemen ausreichend hohe Leistung nur mit Hilfe von den einzelnen Verarbeitungseinheiten jeweils zugeordneten privaten Cachespeichern erzielen. Hierfür am besten geeignet sind Copy-Back-Caches, bei denen im Gegensatz zu Write-Through-Caches, wo alle Schreibzugriffe grundsätzlich auch zum Arbeitsspeicher gehen und damit das Leitungssystem belasten, Änderungen von Daten im Cachespeicher erlaubt sind, ohne daß der Arbeitsspeicher auf denselben Stand gebracht wird.

Damit ergibt sich die Notwendigkeit, die Datenkonsistenz im System zu gewährleisten, weil Speicherdaten sowohl im Arbeitsspeicher als auch in einem oder mehreren privaten Cachespeichern simultan vorhanden sein können. Dies bedeutet, daß bei jeder Anforderung der aktuelle Wert erhalten werden muß, unabhängig davon, ob die Daten nur im Hauptspeicher oder zusätzlich in einem oder mehreren Cachespeichern abgelegt, oder in einem Cachespeicher verändert worden sind und nur noch dort den aktuellen Wert besitzen.

Die Verantwortlichkeit eines Cachespeichers für die Korrektheit von Daten im gesamten System läßt sich an mehreren Zuständen erkennen, die jedem Cachespeichereintrag zugeordnet werden können. Sie ergeben das sogenannte MOESI-Modell, das beispielsweise im Zusammenhang mit dem IEEE Futurebus in "A Class of Compatible Cache Consistency Protocols and their Support by the IEEE Futurebus", Paul Sweazey and Alan Jay Smith, 1986 IEEE, angewandt worden ist, und dessen Namen sich aus den Anfangsbuchstaben der Zustände - Modified, Owned, Exclusive, Shared und Invalid - zusammensetzt.

Bei einer Anforderung einer Verarbeitungseinheit, beispielsweise einem Lesezugriff, werden zunächst die Adresse und anschließend die zugehörigen Daten übertragen. Mit einer einfachen "non-pipelined"-Betriebsweise, bei der lediglich eine Adresse übertragen werden kann, und dann auf die Daten gewartet werden muß, entstehen schon beträchtliche Totzeiten am Leitungssystem, wenn die Zugriffszeit des antwortenden Teilnehmers nur wenig größer als Null ist. Diese Totzeiten können durch Übertragung von weiteren Adressen teilweise genutzt werden, indem bei "pipelining"-Betriebsweise die übertragenen Adressen parallel von den empfangenden Teilnehmern bearbeitet werden können. Die angeforderten Daten müssen aber, um eine eindeutige Zuordnung zu gewährleisten, in der Reihenfolge der aufgesetzten Adressen bereitgestellt werden. Eine zufriedenstellende Auslastung des Leitungssystems kann dann erreicht werden, wenn die Zugriffszeiten der parallel arbeitenden Einheiten etwa gleich groß sind.

Da aber bei realen Systemen erhebliche Unterschiede bei den Zugriffszeiten, beispielsweise aufgrund von Störungen durch Refresh, Ein-/Ausgabe-Zugriffe, Cachespeicher-Interventionen usw., und bei den Laufzeiten aufgrund unterschiedlich langer Wege auftreten können, ist die Auslastung des Leitungssystems zur Erzielung einer besseren mittleren Datenzugriffszeit nicht ausreichend. Darüberhinaus beansprucht naturgemäß die bei jeder Zuteilung des Leitungssystems notwendige Datenkonsistenzüberwachung der privaten Cachespeicher eine gewisse Zeit, so daß die Vergabe des Leitungssystems für die nächstfolgende Anforderung erst mit entsprechender Verzögerung gestartet werden kann.

Der vorliegenden Erfindung liegt daher die Aufgabe zugrunde, ein Leitungssystem für ein Multiprozessorsystem hinsichtlich seiner Leistung zu optimieren.

Diese Aufgabe wird durch die Merkmale des Patentanspruches 1 gelöst.

Die Erzeugung eines Anforderungsidentifizierkennzeichens ermöglicht die Entkopplung von Adressen- und Datenoperation einer auszuführenden Anforderung, so daß Datenantworten außerhalb der durch die Übertragung der verschiedenen Adressen bestimmten Reihenfolge über das Leitungssystem erfolgen können. Schnelle Antworten treffen früher, langsame Antworten später beim jeweils anfordernden Teilnehmer ein. Die Zuordnung der Daten zu ihrer Adresse wird jeweils durch Rückübertragung des zugeordneten Anforderungsidentifizierkennzeichens während der Datenoperation wiederhergestellt. Der Aufbau einer Pipeline ist dadurch möglich, daß in jedem Teilnehmer eine Speichereinrichtung zur Aufnahme der jeweils übertragenen Adresse samt dem Anforderungsidentifizierkennzeichen vorgesehen ist. Parallel dazu wird von jedem Teilnehmer, auch dem Sender selbst, die zu einer ausgelösten Anforderung jeweils gehörige Adresse an der durch das Kennzeichen festgelegten Stelle im eigenen Pufferspeicher abgelegt, so daß alle Teilnehmer das gleiche Abbild des Speicherinhalts besitzen.

Das angewandte Prinzip der Vergabe des Leitungssystems für nächstfolgende Anforderungen, die zu weiteren Eintragungen in den Pufferspeichern und Speichereinrichtungen führen, und die davon losgetrennte Überwachung der an einander entsprechenden Speicherplätzen in den Speichereinrichtungen der einzelnen Teilnehmer bereits hinterlegten Adressen in den Prüfeinrichtungen der Teilnehmer führt zu einem höheren Durchsatz am Leitungssystem und somit zu dessen nahezu optimaler Ausnutzung.

Die Abkopplung von Adressen- und Datenoperation einer Anforderung wird dadurch erreicht, daß nach durchgeführter Überwachung von allen Teilnehmern ein Synchronisierungssignal, sowie in Verbindung mit diesem Signal Begleitsignale gesetzt werden, die das weitere Schicksal einer Anforderung bestimmen.

Gehört zur ausgelösten Anforderung eine Datenoperation, so werden gemäß einer Weiterbildung der Erfindung die angeforderten Daten mit dem zugehörigen Identifizierkennzeichen an den jeweils anfordernden Teilnehmer übermittelt, sobald sie zur Verfügung stehen, jedoch kommt es zu einer Übernahme in den Cachespeicher erst, wenn die Synchronisierung aus der zugehörigen Adressenoperation von allen Teilnehmern für diese Anforderung erfolgt ist, und somit die Korrektheit des Speicherzugriffs mitgeteilt wird.

Gemäß einer Weiterbildung der Erfindung sind eigene Ein-/Ausgabe-Leitungssysteme vorgesehen, an die zusätzlich Verarbeitungseinheiten zur Durchführung von Ein-/Ausgabeanforderungen angeschlossen werden. Dies führt zu einer Reduzierung des Datenverkehrs auf dem Leitungssystem für die Kopplung der Verarbeitungseinheiten mit den Cachespeichern und des gemeinsamen Arbeitsspeichers. Durch die Möglichkeit, mehrere Ein-/Ausgabe-Leitungssysteme gleichberechtigt anzuschließen, können Multiprozessorsysteme hoher Verfügbarkeit geschaffen werden.

Andere Weiterbildungen der Erfindung beziehen sich auf die zusätzlich zum Synchronisierungssignal aussendbaren Begleitsignale sowie auf einen Initialisierungsvorgang am Leitungssystem.

Einzelheiten der Erfindung werden anhand eines in der Zeichnung dargestellten Ausführungsbeispiels näher erläutert.

Im einzelnen zeigen
FIG 1 ein Multiprozessorsystem mit einem Leitungssystem zur Kopplung mehrerer Teilnehmer,
FIG 2 den Aufbau eines Teilnehmers am Beispiel einer Verarbeitungseinheit mit zugehörigem Cachespeicher,
FIG 3a bis 3c die Zeitverhältnisse bei Betrieb des Leitungssystems nach herkömmlicher und erfindungsgemäßer Art,
FIG 4a und 4b die Impulsdiagramme der während des Initialisierungsvorgangs vorkommenden Signale am Leitungssystem.

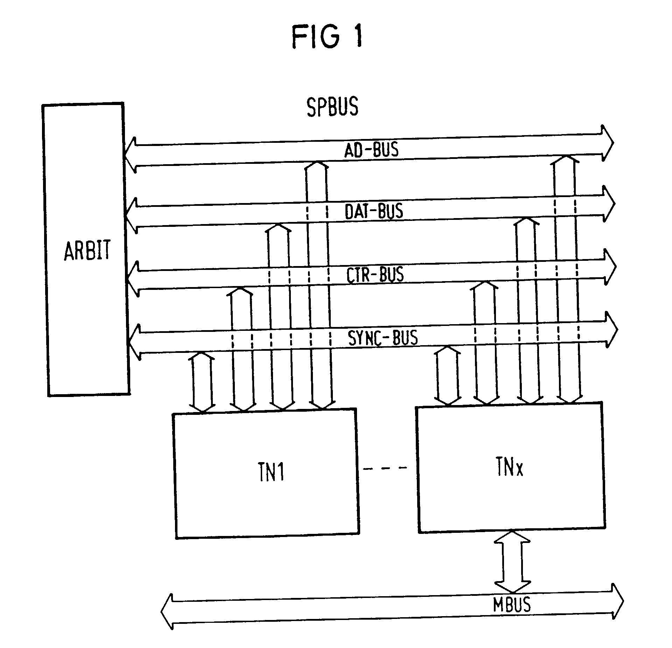

FIG 1 zeigt ein Multiprozessorsystem, in dem mehrere Teilnehmer TN1...TNx über ein Leitungssystem SPBUS miteinander kommunizieren können. Unter den Teilnehmern TN1...TNx befinden sich Verarbeitungseinheiten mit zugehörigen privaten Cachespeichern, ein von allen Verarbeitungseinheiten gemeinsam genutzter Arbeitsspeicher, sowie eigene Verarbeitungseinheiten zur Durchführung von Ein-/Ausgabe-Anforderungen. Daher ist ein zusätzliches Leitungssystem MBUS angeordnet, an das jede Ein-/Ausgabe-Verarbeitungseinheit, z.B. TNx, angeschlossen ist, was zu einer Entlastung des Leitungssystems SPBUS führt. Die beiden voneinander getrennten Leitungssysteme SPBUS und MBUS sind jeweils auf einer Platine mit Rückwandverdrahtung integriert, wobei die Ein-/Ausgabe-Leitungssysteme MBUS mehrerer Platinen gleichberechtigt miteinander verbunden werden können. Dadurch läßt sich ein Multiprozessorsystem hoher Verfügbarkeit realisieren.

Das Leitungssystem SPBUS zur engen Kopplung der einzelnen Teilnehmer TN1...TNx umfaßt mehrere, voneinander unabhängig arbeitende Teilleitungssysteme, von denen das Teilleitungssystem AD-BUS für die Adressensignale, das Teilleitungssystem DAT-BUS für die Datensignale, das Teilleitungssystem CTR-BUS für die Steuersignale, sowie das Teilleitungssystem SYNC-BUS für die Synchronisierungs- und Begleitsignale vorgesehen sind, wobei die einzelnen Signalleitungen jedem Teilnehmer zugeführt sind. Da mehrere, von den einzelnen Teilnehmern TN1...TNx ausgelöste Anforderungen gleichzeitig erfolgen können, sorgt eine Arbitrierungseinrichtung ARBIT für die Zuteilung des Leitungssystems SPBUS an einen der anfordernden Teilnehmer, indem ihm für eine Adressen- bzw. Datenoperation die entsprechenden Teilleitungssysteme zur Verfügung gestellt werden.

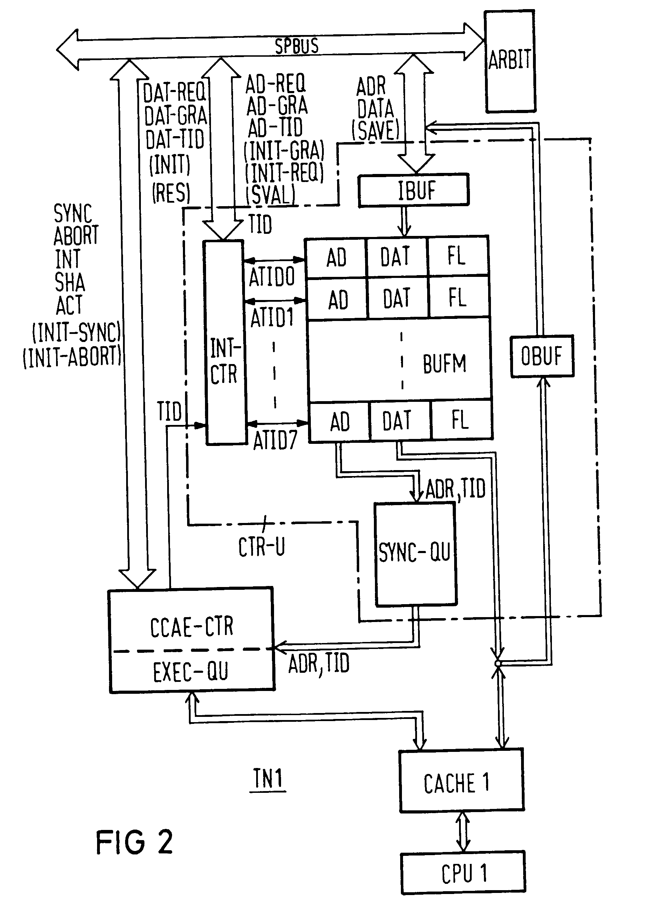

In FIG 2 ist der Aufbau eines Teilnehmers TN1 am Beispiel einer Verarbeitungseinheit CPU1 mit zugehörigem Cachespeicher CACHE1, der vorzugsweise als Copy-Back-Cachespeicher ausgebildet ist, dargestellt. Die Kommunikation zwischen den einzelnen Teilnehmern des Multiprozessorsystems durch Informationsübertragungen über das aus den einzelnen Teilleitungssystemen bestehende Leitungssystem SPBUS soll anhand unterschiedlicher Anforderungsmöglichkeiten der Verarbeitungseinheit CPU1 erklärt werden. Eine durchzuführende Anforderung weist dabei entweder lediglich eine Adressenoperation oder eine Adressenoperation, gefolgt von einer Datenoperation auf.

Für den Fall, daß bei einer Leseanforderung der Verarbeitungseinheit CPU1 die adressierten Daten vom zugehörigen Cachespeicher CACHE1 nicht bereitgestellt werden können (MISS im Cachespeicher), wird vom Teilnehmer TN1 ein Zugriff zum Teilleitungssystem AD-BUS gemäß FIG 1 gewünscht. Dazu sind radial verlaufende Signalleitungen AD-REQ und AD-GRA vorgesehen, die jeweils einen Teilnehmer mit der zentralen Arbitrierungseinrichtung ARBIT verbinden. Erhält der Teilnehmer TN1 nach Aussenden des Signals AD-REQ von der Arbitrierungseinrichtung ARBIT mit dem Signal AD-GRA den Zuschlag, so wird die betreffende Adresse ADR, die zuvor aus dem Cachespeicher CACHE1 ausgelesen und im Adressregister eines Ausgangspuffers OBUF zwischengespeichert worden ist, an das Teilleitungssystem AD-BUS gemäß FIG 1 angelegt.

Mit der Vergabe des Zuteilungssignals AD-GRA wird von der Arbitrierungseinrichtung ARBIT ein Anforderungsidentifizierkennzeichen TID bereitgestellt und über die Adressleitungen AD-TID jeweils zusammen mit der Adresse ADR an alle übrigen Teilnehmer durch das entsprechende Teilleitungssystem mit der maximalen Taktfrequenz übertragen. Sowohl im sendenden Teilnehmer TN1 als auch in allen Empfängern, die prinzipiell den gleichen Aufbau wie der Teilnehmer TN1 aufweisen, beispielsweise ist anstelle der Prüfeinrichtungen für die Datenkonsistenz der Cachespeicher eine entsprechende Prüfeinrichtung für den Arbeitsspeicher im zugehörigen Teilnehmer vorgesehen, wird die Adresse ADR zunächst im Adressregister eines Eingangspuffers IBUF gespeichert.

Das jeweils mitgelieferte Anforderungsidentifizierkennzeichen TID für die Adressenoperation gelangt in eine Schnittstellensteuereinrichtung INT-CTR, in der aus der Kennzeicheninformation Eingangszeiger ATID0...ATID7 zur Adressierung der einzelnen Einträge eines Pufferspeichers BUFM, die jeweils aus einem Adressteil AD, einem Datenteil DAT, sowie aus einem Steuerteil FL bestehen, abgeleitet werden. Die übertragene Adresse ADR wird jeweils im Pufferspeicher BUFM der Kontrolleinrichtung CTR-U jedes Teilnehmers in den Adressteil des Eintrags eingeschrieben, der anhand einer der Zeigeradressen ATID0...ATID7 festgelegt wird. Somit liegt in allen Pufferspeichern BUFM ein identisches Abbild der Speichereinträge an einander entsprechenden Speicherplätzen vor. Die Stelle in einem Pufferspeicher ist eindeutig definiert durch das Anforderungsidentifizierkennzeichen TID, die Kennzeichnung Adresse oder Datum und durch zusätzliche Statusinformationen FL, deren Bedeutung hier weniger wichtig ist.

Gleichzeitig zu einem Eintragungsvorgang in den Pufferspeicher BUFM findet jeweils ein Einschreiben der Adresse ADR zusammen mit dem zugeordneten Identifizierkennzeichen TID in eine weitere Speichereinheit SYNC-QU statt, die als FIFO-Speicher (First-In-First-Out) mit einer der Anzahl der einzelnen Zeigeradressen ATID0...ATID7 entsprechenden Speichertiefe ausgebildet ist. Dadurch entsteht eine Pipeline, indem den anfallenden Anforderungen jeweils ein Identifizierkennzeichen zugeteilt wird, anhand dessen jede Adressenoperation ihrer zugehörigen Anforderung zugeordnet werden kann, und die angelegten Adressen mit den zugeordneten Identifizierkennzeichen in der Reihenfolge ihrer Initialisierung zunächst zwischengespeichert werden, um das Leitungssystem SPBUS für die jeweils nächstfolgende Anforderung sofort freigeben zu können.

Alle Systemteilnehmer überprüfen gleichzeitig zur Initialisierung weiterer Adressenoperationen ihre zugehörigen Cachespeicher bzw. den Arbeitsspeicher auf mögliche Datenkonsistenzkonflikte bzw. auf Vorhandensein der gewünschten Daten, indem die in der Speichereinheit SYNC-QU jeweils zuletzt gespeicherte Adresse ADR der entsprechenden Prüfeinrichtung CCAE-CTR übergeben wird.

Nach durchgeführter Prüfung wird von jedem Teilnehmer am Leitungssystem SPBUS das Signal SYNC gesetzt und aufrechtgehalten, bis alle Teilnehmer dieses Signal für einen Zyklus am Leitungssystem SPBUS aufbereitet haben. Das Signal SYNC ist ein Open-Collector-Signal und wirkt am Leitungssystem als UND-Verknüpfung.

Gleichzeitig zum Signal SYNC können weitere Signale, die auf eventuelle Konflikte hindeuten und somit für die Weiterführung einer Anforderung oder deren Beendigung verantwortlich sind, von der jeweiligen Prüfeinrichtung CCAE-CTR erzeugt werden. So zeigt das Signal SHA an, daß die zur momentan bereitgestellten Adresse gehörenden Daten im Cachespeicher des Teilnehmers vorhanden sind, und daß dieser sie auch noch nach Ausführung der zugehörigen Anforderung behalten möchte, wobei diese Daten durch die Zustände S (Shared) bei deren Nichtveränderung und 0 (Owned) bei deren Veränderung gekennzeichnet sind. Daten, deren gültige Kopie ausschließlich in einem der Cachespeicher enthalten ist, werden durch die Zustände E (Exclusive) bzw. M (Modified) festgelegt, wenn sie nicht verändert bzw. verändert wurden - man siehe MOESI-Modell. Das Signal SHA ist notwendig, damit die Cachespeicher entscheiden können, welche Zustände der Zustandspaare S,E oder O,M sie einnehmen sollen.

Das Signal INT ermöglicht einem Teilnehmer, beispielsweise dann zu intervenieren, wenn bei einem Zugriff zu einem bestimmten Datenblock der zugehörige Cachespeicher diesen Block im Zustand M (Modified) besitzt, so daß dieser Cachespeicher für die Integrität der Daten im gesamten System verantwortlich ist. Die angeforderten Daten werden folglich während der entsprechenden Datenoperation der Leseanforderung vom verantwortlichen Cachespeicher und nicht vom Arbeitsspeicher übergeben. Der Zustand des betreffenden Datenblocks wechselt zu O (Owned), während der anfordernde Teilnehmer diesen Daten in seinem zugehörigen Cachespeicher den Zustand S (Shared) zuweist. Der Zustand 0 (Owned) bedeutet, daß weiterhin dieser Cachespeicher bei Zugriffen auf diese Daten für die Aufrechterhaltung der Datenkonsistenz maßgebend ist.

Das Signal ABORT zeigt an, daß die Anforderung momentan nicht fortgeführt werden darf. Zu einem Abbruch kommt es beispielsweise dann, wenn Datenbereiche in einem Cachespeicher temporären Schutz vor Zugriffen anderer Verarbeitungseinheiten genießen und somit gesperrt sind. Der die Anforderung auslösende Teilnehmer kann diese zu einem späteren Zeitpunkt nochmals initialisieren. Die Begleitsignale INT, ABORT und SHA sind ebenfalls Open-Collector-Signale, die im Gegensatz zum Signal SYNC am Leitungssystem SPBUS als ODER-Verknüpfung wirken.

Betrifft die Leseanforderung einen Datenblock, den kein Cachespeicher der antwortenden Teilnehmer gespeichert hat, werden die Daten vom Teilnehmer mit dem gemeinsamen Arbeitsspeicher bereitgestellt. Dazu wird die Adresse ADR zusammen mit dem Anforderungsidentifizierkennzeichen TID in einer weiteren Speichereinheit EXEC-QU des Teilnehmers, die wie die Speichereinheit SYNC-QU als FIFO ausgebildet und mit einer Speichertiefe von acht Einträgen ausgestattet ist, abgelegt, wenn von allen Teilnehmern das jeweilige Signal SYNC gesetzt ist.

Die mit der Adressenoperation begonnene Anforderung wird dadurch fortgesetzt, daß vom Arbeitsspeicher die Daten DATA in das Datenregister des Ausgangspuffers OBUF der Kontrolleinrichtung CTR-U eingetragen werden, während der antwortende Teilnehmer über die radial verlaufende Signalleitung DAT-REQ eine Zuteilung des Teilleitungssystems DAT-BUS gemäß FIG 1 wünscht. Ist dies durch Aussenden des entsprechenden Antwortsignals DAT-GRA von der Arbitrierungseinrichtung ARBIT geschehen, so werden die Daten DATA dem Ausgangspuffer OBUF entnommen und zusammen mit dem Anforderungsidentifizierkennzeichen TID über die Datenleitungen DAT-TID zum Sender, beispielsweise Teilnehmer TN1, übertragen. Dazu wird zuvor das Identifizierkennzeichen TID aus der Speichereinheit EXEC-QU ausgelesen und der Schnittstellensteuereinrichtung INT-CTR zur Verfügung gestellt, die es schließlich auf den Leitungen DAT-TID des Teilleitungssystems DAT-BUS gemäß FIG 1 weitergibt.

Die beim Teilnehmer TN1 ankommenden Daten DATA gelangen in das Datenregister des Eingangspuffers IBUF und anschließend in den Pufferspeicher BUFM. Dabei wird der Speicherplatz durch das übertragene Anforderungsidentifizierkennzeichen TID bestimmt, aus dem wiederum ein Eingangszeiger erzeugt wird, der mit dem Eingangszeiger für die korrespondierende Adressenoperation der Leseanforderung übereinstimmt. Somit wird erreicht, daß die jeweilige Anforderungsadresse ADR und die zugehörigen Daten DATA in demselben Pufferspeichereintrag gespeichert sind. Wenn der Eintrag für gültig erklärt wird, erkennbar an einem der Statuszeichen FL, und wenn kein Fehler bei der Datenübertragung aufgetreten ist, können die übertragenen Daten vom Pufferspeicher BUFM in den Cachespeicher CACHE1 eingetragen und ihnen der Zustand E (Exclusive) zugeordnet werden.

Tritt der Fall ein, daß die Daten einer Datenoperation über das Teilleitungssystem DAT-BUS gemäß FIG 1 bereits gesendet und im Pufferspeicher BUFM abgelegt wurden, bevor die entsprechende Adressenoperation über das Teilleitungssystem AD-BUS gemäß FIG 1 durch Aussenden der Signale SYNC aller Teilnehmer und durch Nichtanzeige eines Fehlers während des Adresszyklus als abgeschlossen gilt, so werden diese Daten erst vom anfordernden Teilnehmer, beispielsweise TN1, in seinen Cachespeicher CACHE1 übernommen, sobald die Gültigerklärung für die Adressenoperation erfolgt ist. Die Anforderungen werden also in der gleichen Reihenfolge durch die Signale SYNC synchronisiert, wie sie durch Adressenoperationen auf dem Teilleitungssystem AD-BUS gemäß FIG 1 initialisiert werden.

Nach Beendigung der Leseanforderung kann das Anforderungsidentifizierkennzeichen TID nicht sofort wieder vergeben werden, sondern erst dann, wenn es von allen Teilnehmern in einem dafür vorgesehenen eigenen Zyklus für nicht belegt erklärt wird. Im gewählten Ausführungsbeispiel können auf dem Leitungssystem SPBUS bis zu acht Anforderungen gleichzeitig behandelt werden (Pipelining), wobei die Reihenfolge der einzelnen Datenoperationen nicht mit der der korrespondierenden Adressenoperationen übereinstimmen muß. Die Datenoperationen lassen sich durch das Anforderungsidentifizierkennzeichen ihren zugehörigen Anforderungen in einfacher Weise zuteilen (Tag-Pipelining).

Bei einer auf die Leseanforderung folgende Schreibanforderung von der Verarbeitungseinheit CPU1 auf den Datenblock im Cachespeicher CACHE1, der den Zustand E (Exclusive) aufweist, kann das Schreiben lokal im Cachespeicher CACHE1 ausgeführt werden, ohne daß das Leitungssystem in Anspruch genommen wird. Der Zustand der Daten ändert sich dann zu M (Modified).

Löst eine andere Verarbeitungseinheit als die Einheit CPU1 eine Leseanforderung auf denselben Datenblock aus, kommt es zu einer Beanspruchung des Leitungssystem SPBUS in analoger Weise zur vorherigen Leseanforderung durch den Teilnehmer TN1. Jetzt aber weist dessen Cachespeicher CACHE1 den gewünschten Datenblock im Zustand M (Modified) auf, so daß durch Aussenden des Begleitersignals INT angezeigt wird, daß die Daten aus dem Cachespeicher CACHE1 und nicht vom Arbeitsspeicher bereitgestellt werden. Der Zustand des Datenblocks im Cachespeicher CACHE1 wechselt zu O (Owned), so daß der Cachespeicher folglich für die Korrektheit dieses Datenblocks verantwortlich bleibt. Der Cachespeicher der anfordernden Verarbeitungseinheit speichert den Datenblock und weist ihm den Zustand S (Shared) zu. Änderungen von Cachespeicherzuständen veranlaßt jeweils die Prüfeinrichtung CCAE-CTR.

Folgt daraufhin eine Schreibanforderung derselben Verarbeitungseinheit auf denselben Datenblock seines Cachespeichers, so kann diese nicht lokal erfüllt werden, da ein Schreibvorgang auf Daten nur im Zustand E (Exclusive) möglich ist, der Datenblock aber den Zustand S (Shared) aufweist. Die Schreibdaten DATA von der Verarbeitungseinheit werden trotzdem in den zugehörigen Cachespeicher und zusammen mit der Adresse ADR in den Ausgangspuffer OBUF der Kontrolleinrichtung CTR-U eingetragen.

In gleicher Weise wie bei der Leseanforderung wird über das Signal AD-REQ angefragt, ob für eine Adressenoperation das Teilleitungssystem AD-BUS gemäß FIG 1 verfügbar ist. Wird dies mit dem Signal AD-GRA bejaht, liefert die Arbitrierungseinrichtung ARBIT ein Anforderungsidentifizierkennzeichen TID mit, das auf den entsprechenden Adressenleitungen jeweils zusammen mit der Adresse ADR an alle Teilnehmer übertragen und in den dafür vorgesehenen Einrichtungen der jeweiligen Kontrolleinrichtung CTR-U eines Teilnehmers gespeichert wird. Die Datenoperation kann unmittelbar nach der Adressenoperation erfolgen, indem um eine Zuteilung des entsprechenden Teilleitungssystems gebeten wird, so daß die Daten DATA zusammen mit dem zugeordneten Anforderungsidentifizierkennzeichen ebenfalls in seiner Kontrolleinrichtung CTR-U vorhanden sind. Wie bei der Leseanforderung durchlaufen die Adressen und Identifizierkennzeichen die Speichereinrichtungen SYNC-QU, bevor sie der jeweiligen Prüfeinrichtung eines Teilnehmers angeboten werden.

Die Prüfeinrichtung CCAE-CTR des Teilnehmers TN1 sendet mit dem Signal SYNC das Begleitsignal INT aus, da der zugehörige Cachespeicher CACHE1 den von der Schreibanforderung betroffenen Datenblock mit dem Zustand O (Owned) aufweist und somit die Verantwortung für die Datenkonsistenz besitzt. Der Cachespeicher CACHE1 kann nun entweder seinen Datenblock durch den Zustand I (Invalid) für ungültig erklären lassen, oder die in seinem Pufferspeicher BUFM gespeicherten Schreibdaten übernehmen. Dazu wird das Identifizierkennzeichen TID benötigt, das von der Speichereinrichtung EXEC-QU bereitgestellt wird. Im einfacheren Fall der Ungültigerklärung muß durch die Prüfeinrichtung CCAE-CTR des anfordernden Teilnehmers, der in seinem Cachespeicher dann die geänderten Daten exklusiv als einziger Teilnehmer besitzt, der Datenblock durch den Zustand M (Modified) gekennzeichnet werden.

Neben den Lese- und Schreibanforderungen gibt es eine Anforderungsart, bei der keine Daten übertragen werden, so daß lediglich eine Adressenoperation erfolgt. Ihre Funktion liegt dabei jeweils in der Kontrolle der Zustände der einzelnen Cachespeichereinträge.

Zur Koordinierung von Verarbeitungseinheiten in den Teilnehmern werden Nachrichten (Messages) ausgesendet, die lediglich Adresszyklen am Leitungssystem benötigen. Eine wirkungsvolle Message ist beispielsweise eine Unterbrechungsmeldung, durch die alle adressierten Teilnehmer veranlaßt werden, zu ermitteln, wer von ihnen den niederstprioren Vorgang bearbeitet, um sicherzustellen, daß unvermeidbare Störungen wie Unterbrechungen (Interrupts) möglichst nur niederpriore Abläufe verdrängen. Durch Bereitstellung des Signals ACT in Verbindung mit dem Signal SYNC können die Teilnehmer bei einer Anforderung mitteilen, ob sie den Interrupt angenommen haben. Dadurch wird vermieden, daß eine weitere leistungshemmende Unterbrechung als Quittung an den Absender übertragen werden muß. Liegt das Signal ABORT vor oder ist von keinem der Teilnehmer das Signal ACT gesendet worden, so wird die Unterbrechungsanforderung beendet, und der initialisierende Teilnehmer verfügt über weitere Aktionen, beispielsweise indem er die Anforderung wiederholt oder eine Fehlersuche startet.

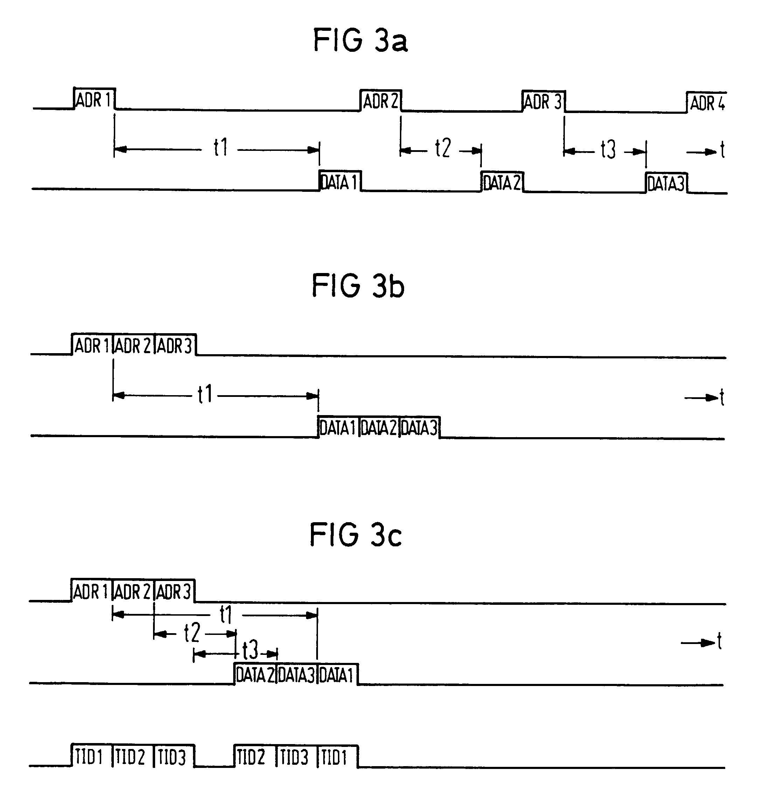

Die FIG 3a bis 3c verdeutlichen anhand einer Prinzipdarstellung der Zeitverhältnisse am Leitungssystem (Bus) für unterschiedliche Betriebsarten den Vorteil der Erfindung. In FIG 3a ist das Busprotokoll für ein System ohne Pipeline-Betrieb gezeichnet. Nach Aufsetzen einer Anforderung durch Initialisierung lediglich einer Adressenoperation mit der Adresse ADR1 kann die nächstfolgende Adresse ADR2 erst dann übertragen werden, wenn die Daten DATA1 der ersten Anforderung nach der Zeit t₁ eingetroffen sind, beispielsweise bei einer Leseanforderung. Gleiches gilt für weitere Zugriffe auf das Leitungssystem, bei denen jeweils auf die Ankunft der Daten DATA2 bzw. DATA3 nach der Zeit t₂ bzw. t₃ gewartet wird bevor die jeweils nächstfolgende Adresse ADR3 bzw. ADR4 gesendet werden kann. Dadurch entstehen beträchtliche Totzeiten am Leitungssystem bereits dann, wenn die Zugriffszeiten der antwortenden Teilnehmer nur wenig größer als Null sind.

In FIG 3b ist eine bessere Auslastung des Leitungssystems erkennbar, weil durch einfaches Pipelining die entstehenden Totzeiten durch Übertragung weiterer Adressen teilweise genutzt werden können. Die übertragenen Adressen ADR1, ADR2 und ADR3 werden von den Empfängern parallel bearbeitet, und die angeforderten Daten DATA1, DATA2 und DATA3 in der Reihenfolge der Adressen nach der Zeit t₁ zurückgesendet, um eine eindeutige Zuordnung herzustellen.

Die Lösung zur Optimierung der Busauslastung zeigt FIG 3c. Jeder Adresse ADR1, ADR2 bzw. ADR3 wird ein Anforderungsidentifizierkennzeichen TID1, TID2 bzw. TID3 angehängt. Dies führt dazu, daß Datenantworten außerhalb der Reihenfolge der angelegten Adressen erfolgen können. Die schnellen Antworten durch Rückgabe der Daten DATA2 nach der Zeit t₂ bzw. der Daten DATA3 nach der Zeit t₃ kommen früher, während auf die langsame Antwort durch Rückgabe der Daten DATA1 nach der Zeit t₁ länger gewartet werden muß. Somit wird der für die Durchführung der drei Anforderungen insgesamt erforderliche Zeitaufwand reduziert. Der Bezug zur anfordernden Adresse wird dabei durch Rückübertragung des Anforderungsidentifizierkennzeichens wiederhergestellt. Voraussetzung zur Ausnutzung dieses Busprotokolls ist die Möglichkeit, eine genügend große Anzahl von Adressen in einer Pipeline zu speichern. Hierzu wurde eine ausreichende Speichertiefe von acht Einträgen in den Speichereinrichtungen gewählt.

Das Leitungssystem SPBUS im Mikroprozessorsystem kann sich ausser im Zustand zur Ausführung von Anforderungen noch in einem Fehlerdiagnose- sowie einem Initialisierungszustand befinden. Dabei werden auf einigen Busleitungen gemäß FIG 2 unterschiedliche Signale entsprechend des eingenommenen Systemzustands übertragen. Der Initialisierungsvorgang läuft gesteuert von der zentralen Arbitrierungseinrichtung ab und gliedert sich in zwei Phasen.

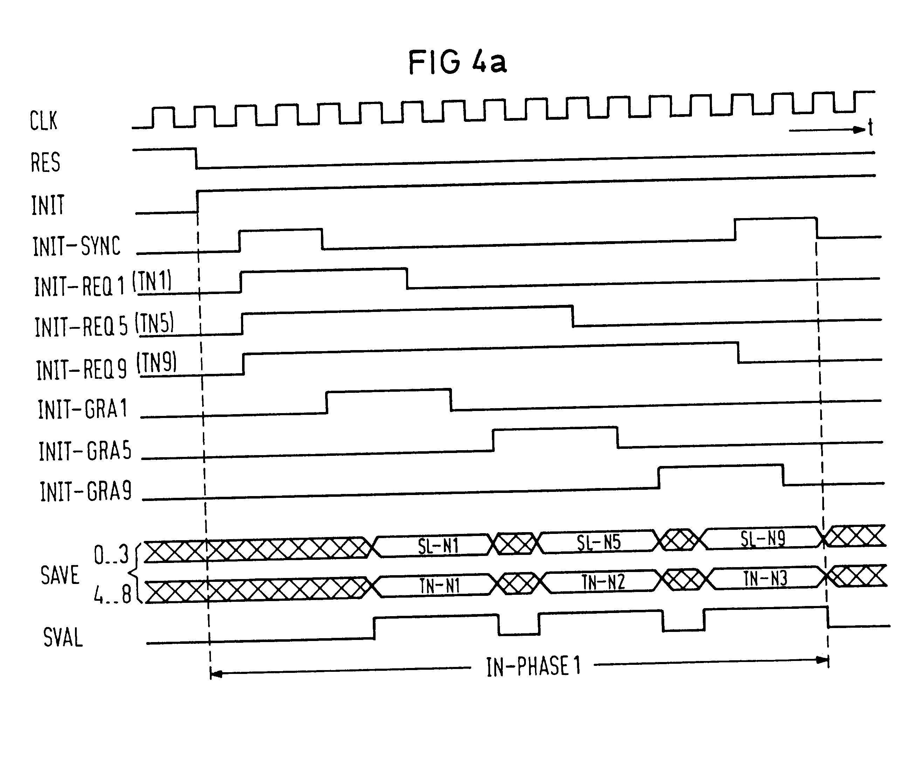

In FIG 4a sind die Impulsdiagramme der in der ersten Initialisierungsphase IN-PHASE1 vorkommenden Signale dargestellt, wobei die einzelnen Signalübergänge von einem zentralen Betriebstaktsignal CLK abgeleitet werden. Vor Beginn des Initialisierungsvorgangs am Leitungssystem wird in der zentralen Arbitrierungseinrichtung das Signal RES erzeugt und über das Teilleitungssystem CTR-BUS gemäß FIG 1 jedem Teilnehmer bereitgestellt. Alle Teilnehmer werden dadurch veranlaßt, ein Rücksetzen der Signalzustände auf den Leitungen des Systems, die sich z.B. auf Grund zuvor ausgeführter Operationen durch die Teilnehmer eingestellt haben, durchzuführen, so daß ein Startzustand erzielt wird, sofern während des Rücksetzvorgangs kein Fehler gemeldet wird.

Die Teilnehmer sind auf Baugruppen, z.B. Steckkarten (boards) angeordnet und in Aufnahmevorrichtungen für die Baugruppen, z.B. Steckschlitze, eines datenverarbeitenden Geräts eingesetzt. Dabei ist für eine einfachere Darstellung und ein besseres Verständnis genau ein Teilnehmer auf einer Baugruppe vorgesehen, was auch den geringsten Aufwand hinsichtlich der Steuerung der Initialisierung bedeutet. Die Zuteilung einer Teilnehmer- und Baugruppennummer durch die zentrale Arbitrierungseinrichtung erfolgt in einer ersten Initialisierungsphase IN-PHASE1, die mit dem Signal INIT zur Anzeige eines Initialisierungsvorgangs am Leitungssystem gestartet wird. Ein Teilnehmer, z.B. TN1, empfängt das Signal, sendet nach Empfang des Signals INIT ein Synchronisierungssignal sowie ein individuelles Anfragesignal, z.B. INIT-REQ1, aus, um seine Bereitschaft für die Entgegennahme der Nummern mitzuteilen.

Bei Vorhandensein mehrerer Teilnehmer auf einer Baugruppe wird eine entsprechende Anzahl von Anfragesignalen erzeugt, aus denen eine Steuereinrichtung auf der Baugruppe ein individuelles Anfragesignal an die Arbitrierungseinrichtung aussendet, bis jeder Teilnehmer seine Nummer erhalten hat. In gleicher Weise verfahren die übrigen Teilnehmer, z.B. TN5 und TN9, die ihrerseits die entsprechenden Signale, z.B. INIT-REQ5 und INIT-REQ9, jeweils begleitet von ihrem teilnehmerindividuellen Synchronisierungssignal bereitstellen. Die einzelnen Synchronisierungssignale sind als Open-Collector-Signale ausgebildet und entfalten eine Wirkung am Leitungssystem als gemeinsames Synchronisierungssignal INIT-SYNC erst dann, wenn sie von allen Teilnehmern angelegt werden.

Liegt folglich das Synchronisierungssignal INIT-SYNC für eine bestimmte Zeitdauer gemeinsam am Leitungssystem an, so wird jedes teilnehmerindividuelle Synchronisierungssignal anschließend vom zugehörigen Teilnehmer wieder rückgesetzt, und die Arbitrierungseinrichtung kann mit der Zuweisung der Nummern beginnen. Anhand eines implementierten Vergabeprinzips wird von der Arbitrierungseinrichtung ein individuelles Antwortsignal, z.B. INIT-GRA1, gesetzt, durch das dem ausgewählten Teilnehmer z.B. TN1, die Übertragung der Informationssignale SAVE angekündigt wird. Ein Vergabeprinzip kann beispielsweise darin bestehen, daß alle von den Einbauplätzen für die Baugruppen beginnend mit dem ersten Einbauplatz fortlaufend (round robin sequence) aufgrund von individuellen Anfragesignalen die Nummern zugeteilt werden.

Ein Teil der übermittelten Informationssignale, z.B. SAVE0...3, beinhaltet die Baugruppennummer, z.B. SL-N1, während der andere Teil, z.B. SAVE4...8, die Teilnehmernummer, z.B. TN-N1, angibt. Bei mehreren Teilnehmern auf der Baugruppe ist eine Zuordnung der übertragenen Teilnehmernummer zu einem Teilnehmer notwendig. Dies übernimmt dann die auf der Baugruppe angeordnete Steuereinrichtung. Jedes der Signale SAVE0...8 wird auf einer Leitung geführt, die einer Bitstelle der binär codierten Information entspricht. Zusätzlich zu den Informationssignalen SAVE wird von der Arbitrierungseinrichtung jeweils ein Signal SVAL geliefert, das die Gültigkeit der ausgesandten Informationen anzeigt.

Hat der ausgewählte Teilnehmer, z.B. TN1, eine Teilnehmernummer, z.B. TN-N1, erhalten, so setzt er sein individuelles Anfragesignal, z.B. INIT-REQ1, zurück und aktiviert sein Synchronisierungssignal. In gleicher Weise werden die Informationssignale SAVE an die anderen Teilnehmer, z.B. TN5 und TN9 nacheinander übertragen, die ebenso ihre individuellen Anfragesignale, z.B. INIT-REQ5 und INIT-REQ9, zurücknehmen und ihre Synchronisierungssignale aussenden.

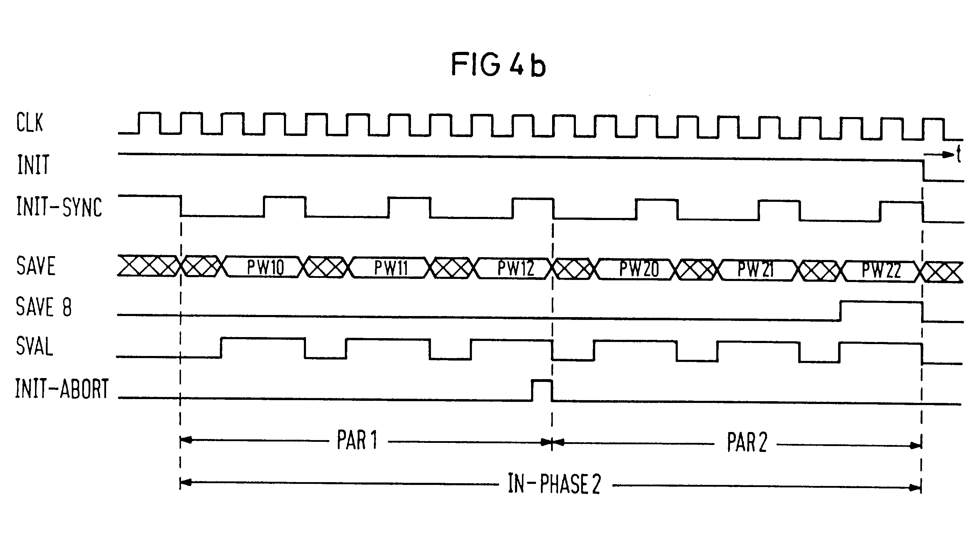

Liegt das gemeinsame Synchronisierungssignal INIT-SYNC aller Teilnehmer für eine bestimmte Zeitdauer vor, werden danach die einzelnen Synchronisierungssignale von den Teilnehmern wieder rückgesetzt, womit die zweite Initialisierungsphase IN-PHASE2 gemäß FIG 4b beginnen kann.

In ihr werden gemeinsame Parameter abhängig von der Leistungsfähigkeit und Funktionalität der am Leitungssystem angeschlossenen Teilnehmer vereinbart. Die auszuhandelnden Parameter sind beispielsweise Taktfrequenz, Datenbreite, Busprotokoll, Anzahl der Pipelines, Anzahl der Signalleitungen zu den Cachespeichern usw., wobei als erster Parameter die Anzahl der zu vereinbarenden Parameter, die ein Teilnehmer und die Arbitrierungseinrichtung kennen, festgelegt wird. Die einzelnen Parameterwerte selbst entsprechen dem Umfang einer Funktion, den ein Teilnehmer am Leitungssystem ausführen kann, beispielsweise Taktfrequenz 30 MHz, 40 MHz usw., und sind Binärzahlen, die so codiert werden, daß steigende Werte höhere Leistungsfähigkeit und Funktionalität bedeuten.

Sobald von der Arbitrierungseinrichtung das Gültigkeitssignal SVAL erzeugt wird, beginnt die Übertragung jeweils eines Parameterwerts durch die Informationssignale SAVE, wobei das Signal SAVE8 erkennen läßt, ob es sich bei dem übertragenen Wert um den höchsten handelt. Für den ersten zu vereinbarenden Parameter PAR1 werden die einzelnen Werte PW10, PW11 und PW12 nacheinander jeweils allen Teilnehmern angeboten, von denen jeweils nach Lesen der einzelnen Werte das teilnehmerindividuelle Synchronisierungssignal zur Bestätigung des Empfangs gesetzt wird. Bei Setzen eines weiteren Signals INIT-ABORT durch wenigstens einen der Teilnehmer wird das Nichteinverständnis mit dem vorgeschlagenen Parameterwert, z.B. PW12, erklärt. Dies ist dadurch möglich, daß das von jedem Teilnehmer setzbare Begleitsignal INIT-ABORT ebenso wie das Synchronisierungssignal als Open-Collector-Signal ausgebildet ist, jedoch im Gegensatz zum Synchronisierungssignal am Leitungssystem als ODER-Verknüpfung wirkt.

Wenn das bereits bei Aktivierung durch einen Teilnehmer von allen Teilnehmern gebildete gemeinsame Synchronisierungssignal INIT-SYNC für eine bestimmte Zeitdauer vorhanden ist, werden die einzelnen Synchronisierungssignale und die eventuell gesetzten Begleitsignale INIT-ABORT von den Teilnehmern rückgesetzt, worauf die nächstfolgende Parameterwertübertragung folgen kann. Bei gesetztem Begleitsignal INIT-ABORT wird der im jeweils vorhergehenden Vereinbarungsvorgang ausgehandelte Parameterwert, z.B. PWll, als der gemeinsame Parameter PAR1 in den Teilnehmern und der Arbitrierungseinrichtung gespeichert, da er den größten von allen Teilnehmern tolerierten Wert darstellt.

Bei der Festlegung eines weiteren Parameters PAR2 wird von der Arbitrierungseinrichtung z.B. das Informationssignal SAVE8 erzeugt, das den übermittelten Parameterwert PW22 als den höchsten zu vereinbarenden Wert kennzeichnet. Bei keinem der vorgeschlagenen Parameterwerte PW20, PW21 und PW22, deren jeweils zu übertragende Informationssignale SAVE durch das Signal SVAL in analoger Weise zur ersten Initialisierungsphase für gültig erklärt werden, ist ein Nichteinverständnis von wenigstens einem der Teilnehmer mitgeteilt worden, so daß der Wert PW22 als der gemeinsame Parameter PAR2 gilt, da für diesen weitere Werte nicht zur Verfügung stehen.

Wenn der letzte auszuhandelnde Parameter festgelegt ist, so wird dies von der Arbitrierungseinrichtung durch Rücksetzen des Signals INIT allen Teilnehmern angezeigt. Für den Fall, daß das Begleitsignal INIT-ABORT bereits beim jeweils niedrigsten Wert eines Vereinbarungsvorgangs für einen Parameter erscheint, wird ein Fehlersignal ausgelöst, das zum vorzeitigen Ende des Initialisierungsvorgangs führt.

## Patentansprüche

1. Multiprozessorsystem mit
- einem Leitungssystem (SPBUS), an das mehrere Verarbeitungseinheiten (z.B. CPU1) mit zugehörigen privaten Cachespeichern (z.B. CACHE1) und ein gemeinsamer Arbeitsspeicher als Teilnehmer angeschlossen sind,
- einer Arbitrierungseinrichtung (ARBIT), in der bei der Zuteilung des Leitungssystems (SPBUS) an einen Teilnehmer (z.B. TN1) für eine Adressenoperation einer auszuführenden Anforderung ein Anforderungsidentifizierkennzeichen (TID) erzeugt wird, das mit der vom anfordernden Teilnehmer (z.B. TN1) angelegten Adresse (ADR) über das Leitungssystem (SPBUS) an alle Teilnehmer übertragen wird,
- mehreren Kontrolleinrichtungen (CTR-U) zur Kopplung der Teilnehmer mit dem Leitungssystem (SPBUS), die jeweils einen Pufferspeicher (BUFM) zur parallelen Speicherung der übertragenen Adresse (ADR) an einander entsprechenden Speicherplätzen, die durch das jeweils bereitgestellte Anforderungsidentifizierkennzeichen (TID) festgelegt werden, sowie jeweils eine Speichereinrichtung (SYNC-QU) zur parallelen Aufnahme der übertragenen Adresse (ADR) und des zugeordneten Anforderungsidentifizierkennzeichens (TID) aufweisen,
- einer Prüfeinrichtung (z.B. CCAE-CTR) in jedem Teilnehmer, von der jeweils gleichzeitig zu weiteren Übertragungen über das Leitungssystem (SPBUS) die einzelnen, in der Speichereinrichtung (SYNC-QU) enthaltenen Adressen (ADR) in der Reihenfolge ihrer Speicherung empfangen sowie die Verantwortlichkeit des Teilnehmers für die Daten im System dadurch festgestellt wird, daß die jeweils adressierten Daten im zugehörigen Cachespeicher (z.B. CACHE1) auf Konsistenz oder im gemeinsamen Arbeitsspeicher auf Vorhandensein geprüft werden, und von der jeweils nach durchgeführter Prüfung ein Signal (SYNC) zur Synchronisierung und abhängig vom Prüfergebnis zusätzlich Begleitsignale (ABORT,INT,SHA,ACT) zur Beendigung oder Fortführung der an dem Anforderungsidentifizierkennzeichen (TID) erkennbaren Anforderung ausgesendet werden.

2. Multiprozessorsystem nach Anspruch 1 mit einer weiteren Speichereinrichtung (EXEC-QU) in jedem Teilnehmer, in der bei festgestellter Verantwortlichkeit des Teilnehmers für die adressierten Daten die zugehörige Adresse (ADR) und das Anforderungsidentifizierkennzeichen (TID) gespeichert werden, so daß bei der Zuteilung des Leitungssystems (SPBUS) für eine Datenoperation das jeweils gespeicherte Anforderungsidentifizierkennzeichen (TID) und die mit der Adresse (ADR) aus dem zugehörigen Speicher des antwortenden Teilnehmers ausgelesenen Daten bereitgestellt, zum anfordernden Teilnehmer (z.B. TN1) gemeinsam übertragen, sowie die Daten (DATA) im zugehörigen Pufferspeicher (BUFM) zwischengespeichert und bei Vorliegen der Synchronisierungssignale (SYNC) aller Teilnehmer aus der zugehörigen Adressenoperation in den Cachespeicher (z.B. CACHE1) eingetragen werden.

3. Multiprozessorsystem nach Anspruch 1 mit Verarbeitungseinheiten (z.B. TNx) zur Durchführung von Ein-/Ausgabeanforderungen, die zusätzlich als Teilnehmer an das Leitungssystem (SPBUS) für die Verarbeitungseinheiten (z.B. CPU1) mit den zugehörigen Cachespeichern sowie an ein weiteres Leitungssystem (MBUS) für die Ein-/Ausgabe angeschlossen sind, wobei mehrere Ein-/Ausgabe-Leitungssysteme miteinander koppelbar sind.

4. Multiprozessorsystem nach Anspruch 1 oder 2, bei dem eines der Begleitsignale (ABORT) die Beendigung einer ausgelösten Anforderung anzeigt, ein anderes Begleitsignal (INT) veranlaßt, daß die adressierten Daten von dem privaten Cachespeicher, der die Verantwortung für die Datenkonsistenz im System trägt, bereitgestellt bzw. in ihm aktualisiert werden, und ein weiteres Begleitsignal (SHA) anzeigt, daß eine Kopie der adressierten Daten in einem anderen als dem zur anfordernden Verarbeitungseinheit gehörigen privaten Cachespeicher vorhanden ist.

5. Multiprozessorsystem nach einem der Ansprüche 1 bis 3, bei dem die Teilnehmer zur Ausführung einer aus einer Unterbrechungsmeldung bestehenden Adressenoperation die Annahme der Unterbrechungdurch ein entsprechendes Begleitsignal (ACT) mitteilen.

6. Multiprozessorsystem nach einem der Ansprüche 1 bis 5, bei dem die Teilnehmer (TN1...TNx) entsprechend ihren zugehörigen Leistungsmerkmalen unterschiedliche Parameter aufweisen, und bei dem der Initialisierungsvorgang aus zwei Initialisierungsphasen (IN-PHASE1 und IN-PHASE2) besteht, in denen während der ersten Initialisierungsphase (IN-PHASE1)
- von jedem Teilnehmer (z.B. TN1) ein Synchronisierungssignal sowie ein individuelles Anfragesignal (z.B. INIT-REQ1) erzeugt werden,
- bei Vorliegen aller teilnehmerindividuellen Synchronisierungssignale (INIT-SYNC) von der Arbitrierungseinrichtung (ARBIT) jeweils ein individuelles Antwortsignal (z.B. INIT-GRAl) ausgesendet und die eine Teilnehmernummer (z.B. TN-Nl) enthaltenden Informationssignale (SAVE) über das Leitungssystem (SPBUS) an einen der Teilnehmer (z.B. TNl) übertragen werden,
- vom Teilnehmer (z.B. TN1) jeweils nach Erhalt einer Teilnehmernummer (z.B. TN-Nl) sein individuelles Synchronisierungssignal erzeugt wird,
sowie während der zweiten Initialisierungsphase (IN-PHASE2)
- von der Arbitrierungseinrichtung (ARBIT) die einen Parameterwert (z.B. PW10) enthaltenden Informationssignale (SAVE) über das Leitungssystem (SPBUS) an alle Teilnehmer übertragen, und
- von jedem Teilnehmer (z.B. TN1) ein individuelles Synchronisierungssignal zur Bestätigung der Übertragung eines Parameterwertes (z.B. PW10) und ein Begleitsignal (INIT-ABORT) bei Nichteinverständnis mit dem übermittelten Parameterwert (z.B. PW12) erzeugt werden.

7. Multiprozessorsystem nach Anspruch 6, bei dem von der Arbitrierungseinrichtung (ARBIT) ein Gültigkeitssignal (SVAL) zusätzlich zu den Informationssignalen (SAVE) ausgesendet wird, das während der zweiten Initialisierungsphase (IN-PHASE2) allen Teilnehmern jeweils den Beginn einer Parameterwertübertragung anzeigt.

8. Multiprozessorsystem nach Anspruch 6 oder 7, bei dem die teilnehmerindividuellen Synchronisierungssignale und gesetzte Begleitsignale (INIT-ABORT) von den Teilnehmern rückgesetzt werden, sobald alle Synchronisierungssignale (INIT-SYNC) gemeinsam für eine bestimmte Zeitdauer am Leitungssystem anliegen.

9. Multiprozessorsystem nach einem der Ansprüche 6 bis 8, bei dem von der Arbitrierungseinrichtung (ARBIT) ein Initialisierungssignal (INIT) an alle Teilnehmer ausgesendet wird, das ihnen den Beginn und das Ende des Initialisierungsvorgangs mitteilt.

10. Multiprozessorsystem nach einem der Ansprüche 6 bis 9, bei dem bei nichtgesetztem Begleitsignal (INIT-ABORT) der jeweils übermittelte Parameterwert (z.B. PW22) in allen Teilnehmern und der Arbitrierungseinrichtung (ARBIT) als der gemeinsam vereinbarte Parameter (z.B. PAR2) gespeichert wird.

11. Multiprozessorsystem nach einem der Ansprüche 6 bis 10, bei dem bei wenigstens von einem der Teilnehmer gesetztem Begleitsignal (INIT-ABORT) an Stelle des jeweils übertragenen Parameterwerts (z.B. PW12) der im vorherigen Vereinbarungsschritt ausgehandelte Parameterwert (z.B. PWll) in allen Teilnehmern und der Arbitrierungseinrichtung (ARBIT) als der gemeinsam vereinbarte Parameter (z.B. PAR1) gespeichert wird.

12. Multiprozessorsystem nach einem der Ansprüche 6 bis 11, bei dem von der Arbitrierungseinrichtung (ARBIT) ein Informationssignal (SAVE8) übertragen wird, das bei gesetztem Zustand anzeigt, daß der übertragene Parameterwert (z.B. PW22) der höchste zu vereinbarende Wert ist und bei nichtgesetztem Begleitsignal (INIT-ABORT) als gemeinsamer Paramter (z.B. PAR2) gespeichert wird.

13. Multiprozessorsystem nach einem der Ansprüche 6 bis 12, bei dem bei wenigstens von einem der Teilnehmer im ersten Vereinbarungsschritt gesetztem Begleitsignal (INIT-ABORT) ein Fehlersignal erzeugt wird.

## Claims

1. Multiprocessor system having
- a wiring system (SPBUS) to which there are connected as users a plurality of processing units (for example CPU1) with associated private cache memories (for example CACHE1) and a common main memory,
- an arbitrator (ARBIT), in which on the assigning the wiring system (SPBUS) to a user (for example TN1) for an address operation of a request to be carried out, a request identification code (TID) is generated which is transmitted to all users via the wiring system (SPBUS) with the address (ADR) applied by the requesting user (for example TN1),
- a plurality of control devices (CTR-U) for coupling the users to the wiring system (SPBUS), which in each case have a buffer memory (BUFM) of parallel storage of the transmitted address (ADR) at mutually corresponding memory locations which are fixed by the respectively provided request identification code (TID), and in each case have a storage device (SYNC-QU) for parallel reception of the transmitted address (ADR) and of the assigned request identification code (TID),
- a checking device (for example CCAE-CTR) in each user, by means of which in each case at the same time as further transmissions via the wiring system (SPBUS) the individual addresses (ADR) contained in the storage device (SYNC-QU) are received in the sequence of their storage and the responsibility of the user for the data in the system is established by checking the respectively addressed data in the associated cache memory (for example CACHE1) for consistency of those in the common main memory for presence, and by means of which in each case after checking has been carried out a signal (SYNC) is emitted for the purpose of synchronization and, as a function of the result of checking, additional auxiliary signals (ABORT,INT,SHA,ACT) for the purpose of terminating or continuing the request detectable from the request identification code (TID).

2. Multiprocessor system according to Claim 1, having a further storage device (EXEC-QU) in each user, in which on establishment of the responsibility of the user for the addressed data, the associated address (ADR) and the request identification code (TID) are stored, with the result that on assignment of the wiring system (SPBUS) for a data operation the respectively stored request identification code (TID) and the data read out with the address (ADR) from the associated memory of the answering user are provided and transmitted together to the requesting user (for example TN1), and the data (DATA) are temporarily stored in the associated buffer memory (BUFM) and, given the presence of the synchronization signals (SYNC) of all the users, is entered into the cache memory (for example CACHE1) from the associated address operation.

3. Multiprocessor system according to Claim 1, having processing units (for example TNx) for carrying out input/output requests, which are additionally connected as users to the wiring system (SPBUS) for the processing units (for example CPU1) with the associated cache memories and to a further wiring system (MBUS) for the input/output, it being possible for a plurality of input/output wiring systems to be coupled to one another.

4. Multiprocessor system according to Claim 1 or 2, in which one of the auxiliary signals (ABORT) indicates the termination of an initiated request, another auxiliary signal (INT) prompts the addressed data to be provided by the private cache memory which bears the responsibility for the data consistency in the system, or prompts them to be updated in said private cache memory, and a further auxiliary signal (SHA) indicates that a copy of the addressed data is present in another private cache memory than that associated with the requesting processing unit.

5. Multiprocessor system according to one of Claims 1 to 3, in which for the purpose of carrying out an address operation comprising an interruption message the users signal the acceptance of the interruption by an appropriate auxiliary signal (ACT).

6. Multiprocessor system according to one of Claims 1 to 5, in which the users (TN1...TNx) have different parameters in accordance with their associated facilities, and in which the initialization operation-comprises two initialization phases (IN-PHASE1 and IN-PHASE2) in which during the first initialization phase (IN-PHASE1)
- a synchronization signal and an individual request signal (for example INIT-REQ1) are generated by each user (for example TN1),
- the arbitrator (ARBIT) emits an individual response signal (for example INIT-GRA1) in the presence of all the user-specific synchronization signals (INIT-SYNC) and the information signals (SAVE) containing a user number (for example TN-N1) are transmitted to one of the users (for example TN1) via the wiring system (SPBUS),
- after receiving a user number (for example TN-N1), the user (for example TN1) generates his individual synchronization signal,
and during the second initialization phase (IN-PHASE2)
- the arbitrator (ARBIT) transmits the information signals (SAVE) containing a parameter value (for example PW10) to all users via the wiring system (SPBUS), and
- each user (for example TN1) generates an individual synchronization signal for confirming the transmission of a parameter value (for example PW10), and an auxiliary signal (INIT-ABORT) in the case of lack of agreement with the transmitted parameter value (for example PW12).

7. Multiprocessor system according to Claim 6, in which in addition to the information signals (SAVE) the arbitrator (ARBIT) emits a validity signal (SVAL) which respectively indicates the start of a parameter value transmission to all users during the second initialization phase (IN-PHASE2).

8. Multiprocessor system according to Claim 6 or 7, in which the user-specific synchronization signals and set auxiliary signals (INIT-ABORT) are reset by the users as soon as all the synchronization signals (INIT-SYNC) are present together for a specific time period on the wiring system.

9. Multiprocessor system according to one of Claims 6 to 8, in which the arbitrator (ARBIT) emits to all users an initialization signal (INIT) which signals to them the start and the end of the initialization operation.

10. Multiprocessor system according to one of Claims 6 to 9, in which when there is no set auxiliary signal (INIT-ABORT) the respectively transmitted parameter value (for example PW22) is stored in all users and the arbitrator (ARBIT) as the common agreed parameter (for example PAR2).

11. Multiprocessor system according to one of Claims 6 to 10, in which given an auxiliary signal (INIT-ABORT) set at least by one of the users, instead of the respectively transmitted parameter value (for example PW12) the parameter value (for example PW11) negotiated in the previous agreement step is stored in all the users and the arbitrator (ARBIT) as the common agreed parameter (for example PAR1).

12. Multiprocessor system according to one of Claims 6 to 11, in which the arbitrator (ARBIT) transmits an information signal (SAVE8) which in the set state indicates that the transmitted parameter value (for example PW22) is the highest value to be agreed, and is stored as common parameter (for example PAR2) when the auxiliary signal (INIT-ABORT) is not set.

13. Multiprocessor system according to one of Claims 6 to 12, in which an error signal is generated given an auxiliary signal (INIT-ABORT) set at least by one of the users in the first agreement step.

## Revendications

1. Système multiprocesseur comportant
- un bus (SPBUS), auquel plusieurs unités de traitement (par exemple CPU1) ayant leurs antémémoires privées (par exemple CACHE1) et une mémoire de travail commune sont raccordées en tant que participants,
- un dispositif d'arbitrage (ARBIT), dans lequel est produit, lors de l'attribution du bus (SPBUS) à un participant (par exemple TN1) pour une opération sur les adresses issue d'une demande à exécuter, un identificateur de demande (TID) qui est transmis avec l'adresse (ADR) appliquée par le participant demandeur (par exemple TN1), par l'intermédiaire du bus (SPBUS), à tous les participants,
- plusieurs dispositifs de contrôle (CTR-U) qui sont destinés à la connexion des participants au bus (SPBUS) et qui comportent chacun une mémoire tampon (BUFM) pour la mémorisation en parallèle de l'adresse transmise (ADR) à des emplacements en mémoire qui se correspondent et qui sont déterminés par l'identificateur de demande (TID) fourni, ainsi qu'un dispositif de mémoire (SYNC-QU) pour la réception en parallèle de l'adresse transmise (ADR) et de l'identificateur de demande (TID) associé,
- dans chaque participant, un dispositif de vérification (par exemple CCAE-CTR) qui reçoit les différentes adresses (ADR) contenues dans le dispositif de mémoire (SYNC-QU), dans l'ordre de leur mémorisation, à chaque fois en même temps que d'autres transmissions par l'intermédiaire du bus (SPBUS), qui détermine la responsabilité du participant pour les données dans le système par le fait que les données adressées sont vérifiées dans l'antémémoire associée (par exemple CACHE1), pour savoir si elles sont cohérentes, et dans la mémoire de travail commune, pour savoir si elles sont présentes, et qui émet après chaque vérification un signal (SYNC) destiné à la synchronisation et en plus, en fonction du résultat de la vérification, des signaux d'accompagnement (ABORT, INT, SHA, ACT) en vue de l'arrêt ou de la poursuite de la demande identifiable par l'identificateur de demande (TID).

2. Système multiprocesseur selon la revendication 1, comportant, dans chaque participant, un autre dispositif de mémoire (EXEC-QU) dans lequel l'adresse associée (ADR) et l'identificateur de demande (TID) sont mémorisés lorsqu'il a été constaté que le participant est responsable pour les données adressées de sorte que, lors de l'attribution du bus (SPBUS) pour une opération sur les données, l'identificateur de demande (TID) mémorisé et les données extraites à l'adresse (ADR) de la mémoire associée du participant répondant sont fournis et sont transmis ensemble au participant demandeur (par exemple TN1), et les données (DATA) sont mémorisées temporairement dans la mémoire tampon (BUFM) associée et sont enregistrées dans l'antémémoire (par exemple CACHE1) à partir de l'opération sur les adresses lorsque les signaux de synchronisation (SYNC) de tous les participants sont présents.

3. Système multiprocesseur selon la revendication 1, comportant des unités de traitement (par exemple TNx) qui sont destinées à l'exécution de demandes d'entrée/sortie et qui sont raccordées en plus en tant que participants au bus (SPBUS) pour les unités de traitement (par exemple CPU1) avec leurs antémémoires ainsi qu'à un autre bus (MBUS) pour les entrées/sorties, plusieurs bus d'entrée/sortie pouvant être interconnectés.

4. Système multiprocesseur selon la revendication 1 ou 2, dans lequel un des signaux d'accompagnement (ABORT) indique l'arrêt d'une demande déclenchée, un autre signal d'accompagnement (INT) fait que les données adressées sont fournies par, ou sont actualisées dans, l'antémémoire privée qui porte dans le système la responsabilité de la cohérence des données, et un autre signal d'accompagnement (SHA) indique qu'une copie des données adressées est présente dans une antémémoire privée autre que celle appartenant à l'unité de traitement effectuant la demande.

5. Système multiprocesseur selon l'une des revendications 1 à 3, dans lequel les participants, pour l'exécution d'une opération sur les adresses consistant en un message d'interruption, informent de la prise de l'interruption au moyen d'un signal d'accompagnement (ACT) correspondant.

6. Système multiprocesseur selon l'une des revendications 1 à 5, dans lequel les participants (TN1 à TNx) comportent différents paramètres en fonction de leurs facilités offertes et dans lequel l'opération d'initialisation est constituée de deux phases d'initialisation (IN-PHASE1 et IN-PHASE2) qui sont telles que, pendant la première phase d'initialisation (IN-PHASE1),
- chaque participant (par exemple TN1) produit un signal de synchronisation ainsi qu'un signal d'interrogation (par exemple INIT-REQ1) individuel,
- lorsque tous les signaux de synchronisation (INIT-SYNC) propres aux participants sont présents, le dispositif d'arbitrage (ARBIT) émet un signal de réponse (par exemple INIT-GRA1) individuel et les signaux d'informations (SAVE) contenant un numéro de participant (par exemple TN-N1) sont transmis par l'intermédiaire du bus (SPBUS) à un des participants (par exemple TN1),
- le participant (par exemple TN1) produit, après obtention d'un numéro de participant (par exemple TN-N1), son signal de synchronisation individuel,
et, pendant la seconde phase d'initialisation (IN-PHASE2)
- le dispositif d'arbitrage (ARBIT) transmet à tous les participants, par l'intermédiaire du bus (SPBUS), les signaux d'informations (SAVE) contenant une valeur de paramètre (par exemple PW10), et
- chaque participant (par exemple TN1) produit un signal de synchronisation individuel pour attester de la transmission d'une valeur de paramètre (par exemple PW10) et un signal d'accompagnement (INIT-ABORT) lors d'un désaccord concernant la valeur de paramètre communiquée (par exemple PW12).

7. Système multiprocesseur selon la revendication 6, dans lequel le dispositif d'arbitrage (ARBIT) émet, en plus des signaux d'informations (SAVE), un signal de validité (SVAL) qui indique le début d'une transmission de valeur de paramètre à tous les participants pendant la seconde phase d'initialisation (IN-PHASE2).

8. Système multiprocesseur selon la revendication 6 ou 7, dans lequel les signaux de synchronisation propres aux participants et des signaux d'accompagnement positionnés (INIT-ABORT) sont remis à l'état initial par les participants dès que tous les signaux de synchronisation (INIT-SYNC) sont présents ensemble sur le bus pour un certain temps.

9. Système multiprocesseur selon l'une des revendications 6 à 8, dans lequel le dispositif d'arbitrage (ARBIT) envoie à tous les participants un signal d'initialisation (INIT) qui informe ces participants du début ou de la fin de l'opération d'initialisation.

10. Système multiprocesseur selon l'une des revendications 6 à 9, dans lequel, si le signal d'accompagnement (INIT-ABORT) n'a pas été positionné, la valeur de paramètre (par exemple PW22) juste communiquée est mémorisée, dans tous les participants et dans le dispositif d'arbitrage (ARBIT), comme étant le paramètre (par exemple PAR2) spécifié en commun.

11. Système multiprocesseur selon l'une des revendications 6 à 10, dans lequel, si au moins l'un des participants a positionné un signal d'accompagnement (INIT-ABORT), la valeur de paramètre (par exemple PW11), qui a été traitée lors du pas de spécification précédent, est mémorisée, à la place de la valeur de paramètre (par exemple PW12) juste communiquée, dans tous les participants et dans le dispositif d'arbitrage (ARBIT), comme étant le paramètre (par exemple PAR1) spécifié en commun.

12. Système multiprocesseur selon l'une des revendications 6 à 11, dans lequel le dispositif d'arbitrage (ARBIT) transmet un signal d'information (SAVE8) qui indique, à l'état positionné, que la valeur de paramètre (par exemple PW22) transmise est la plus grande valeur à spécifier et qui la mémorise comme étant le paramètre (par exemple PAR2) commun lorsque le signal d'accompagnement (INIT-ABORT) n'a pas été positionné.

13. Système multiprocesseur selon l'une des revendications 6 à 12, dans lequel un signal d'erreur est produit si au moins l'un des participants a positionné le signal d'accompagnement (INIT-ABORT) lors du premier pas de spécification.
